# EUROPÄISCHE PATENTSCHRIFT

(11) **EP 1 349 726 B1**
(45) Veröffentlichungstag und Bekanntmachung des Hinweises auf die Patenterteilung: **13.09.2006**
(21) Anmeldenummer: 01272625.3
(22) Anmeldetag: 11.10.2001
(51) Int. Cl.: B32B 15/08, B32B 15/20, F25B 39/02

(54) **VERFAHREN ZUM HERSTELLEN VON VERDAMPFERPLATTEN**
METHOD OF PRODUCING EVAPORATOR BOARDS
PROCEDE DE PRODUCTION DE PLAQUES D'EVAPORATEUR

(30) Priorität: 08.01.2001 DE 10100526
(43) Veröffentlichungstag der Anmeldung: 08.10.2003
(73) Patentinhaber: Flamm Aktiengesellschaft, 52078 Aachen (DE)
(72) Erfinder: FLAMM, Frieder, 52223 Stolberg (DE)
(74) Vertreter: Kohlmann, Kai
(86) Internationale Anmeldenummer: PCT/EP2001/011754
(87) Internationale Veröffentlichungsnummer: WO 2002/053371

(56) Entgegenhaltungen:
- EP-A- 0 473 843
- EP-A- 0 703 427
- EP-A- 0 844 447
- DE-A- 2 645 059
- FR-A- 2 794 227
- US-A- 4 461 796
- DATABASE WPI Section Ch, Week 197845 Derwent Publications Ltd., London, GB; Class A17, AN 1978-80637A XP002193597 & JP 53 111558 A (DAICEL LTD), 29. September 1978 (1978-09-29)
- DATABASE WPI Section Ch, Week 199011 Derwent Publications Ltd., London, GB; Class A93, AN 1990-077714 XP002193598 & JP 01 306236 A (CIE ROYALE ASTRURIE), 11. Dezember 1989 (1989-12-11)

## Beschreibung

Die Erfindung betrifft eine Verdampferplatte für eine Kältemaschine mit zwischen zwei aufeinanderliegenden Blechen angeordneten Kältemittelkanälen sowie ein Verfahren zum Herstellen von Verdampferplatten.

Verdampferplatten sind ein Bestandteil einer Kältemaschine, in dem das flüssige Kältemittel unter Wärmeaufnahme aus der Umgebung verdampft wird. Kältemaschinen sind ortsfeste oder bewegliche Einrichtungen zur Kühlung von geschlossenen Räumen und von festen, flüssigen oder gasförmigen Körpern auf eine Temperatur unter derjenigen der Umgebung.

Verdampferplatten werden nach dem Stand der Technik hergestellt, indem verzinktes Aluminiumblech zunächst gerichtet und anschließend auf die gewünschte Größe der Verdampferplatte zugeschnitten wird. Auf die zugeschnittenen Bleche wird ein Trennmittel, z.B. Graphit, als Abbild des Kanalverlaufs für das Kältemittel in der Verdampferplatte aufgetragen. Anschließend werden zwei Platten zusammengelegt und unter Wärmezufuhr in einer Heizeinrichtung verpresst, so dass die beiden Bleche verlöten. Sodann werden die nicht verlöteten Kanalbereiche in einem Formwerkzeug beispielsweise mit Stickstoff aufgeblasen.

Darüber hinaus ist aus einem Prospekt der Fa. SHOWA ALUMINIUM CORPORATION, Osaka, Japan - 1993 ein sogenanntes Roll-Bond Verfahren bekannt, bei dem die aufeinanderliegenden Bleche nicht verlötet, sondern durch Heißwalzen miteinander verschweißt und anschließend auf Enddicke kalt ausgewalzt werden. Die durch das im Siebdruckverfahren aufgetragene Trennmittel von der Verschweißung ausgenommenen Kanalbereiche werden mit Druckluft aufgeblasen, bevor die Bleche in die einzelnen Verdampferplatten unterteilt werden. Nachteilig bei diesem Verfahren ist die Blechdickenänderung beim Heißwalzen und in dem nachgeordneten Kaltwalzschritt, da sie unmittelbar zu entsprechenden Blechlängenänderungen führen. Hieraus resultieren Probleme, die in nachfolgenden Arbeitsschritten zu einem hohen Ausschuss führen.

Die nach den bekannten Verfahren hergestellten Verdampferplatten müssen aus Reinaluminium (A1 99,5) hergestellt werden, um das Einbringen der Kältemittelkanäle zu ermöglichen.

Ausgehend von diesem Stand der Technik liegt der Erfindung daher die Aufgabe zugrunde eine Verdampferplatte zu schaffen, die nicht notwendigerweise aus Reinaluminium bestehen muss und dennoch einfach in großer Stückzahl herstellbar ist. Weiter liegt der Erfindung die Aufgabe zugrunde, ein Verfahren zur einfachen Serienfertigung von Verdampferplatten mit geringem Ausschuss vorzuschlagen, dass zugleich weniger Energie benötigt und mehr Gestaltungsspielraum hinsichtlich der Kältemittelkanalgeometrie eröffnet.

Der Erfindung zu Grunde liegende Gedanke besteht darin, dass die Verdampferplatte bildenden Bleche nicht wie bisher durch einen Lötvorgang oder einen Heißwalzprozess (Druck-Schweißen) gefügt werden, sondern mittels eines Klebstoffes miteinander verbunden sind, wobei Klebstoffe zum Einsatz gelangen, die beständig gegen Kältemittel sind und zumindest im Temperaturbereich zwischen - 30° C und + 40° C ihre Klebeeigenschaften beibehalten.

Als Klebstoffe kommen insbesondere Einkomponenten- oder Zweikomponenten-Klebstoffe zum Einsatz. Als besonders geeignet haben sich Zweikomponenten-Polyurethan Klebstoffe und Einkomponenten-Epoxydharz-Klebstoffe sowie temperaturabhängige Polyurethan- und Polyamid-Hotmelt Klebstoffe herausgestellt, wobei die Schichtdicke des Klebstoffs vorzugsweise im Bereich von 0,1 mm bis - 1,45 mm liegt. Die Hotmelt-Klebstoffe werden nicht erst nach der Formgebung des Kanals aufgetragen, sondern bereits auf dem insbesondere bandförmigen Ausgangsmaterial der Verdampferplatte. Derart beschichtete Bänder können wie unbeschichtete zum Coil gewickelt werden, ohne miteinander zu verkleben. Die Klebwirkung setzt erst nach Erwärmen auf eine bestimmte Temperatur ein.

Das Fügen der Bleche durch einen Klebstoff erlaubt den Einsatz von Blechen mit Enddicke und Endfestigkeit, was sich vorteilhaft auf die Maßhaltigkeit der Verdampferplatten bei gleichzeitig verringerter Ausschussrate auswirkt. Der Energie-Einsatz ist beim Verkleben gegenüber den bisherigen, Verbindungstechniken erheblich reduziert. Zum flächigen Aufbringen auf die Fügeflächen kann der Klebstoff mit Walzen aufgerollt oder mit einem rakel- oder spachtelähnlichen Werkzeug aufgestrichen werden. Alternativ zum flächigen Auftragen kann der Klebstoff auch in Bahnen aufgespritzt werden, wobei die Menge so dosiert wird, dass nach dem Fügen der zu verklebenden Bleche kein überschüssiger Kleber in die Kältemittelkanäle eindringt.

Wenn die Kältemittelkanäle im Wege des Kalt-Umformens, insbesondere durch Tiefziehen oder Prägen, eingebracht werden, lässt sich eine hohe Querschnittswiederholgenauigkeit sowie eine flexible Anordnung der Kältemittelkanäle in den aufeinanderliegenden Blechen der Verdampferplatte, wahlweise einseitig, beidseitig oder wechselseitig erreichen.

Das Einbringen der Kältemittelkanäle durch Tiefziehen oder Prägen ermöglicht den Einsatz von Aluminiumlegierungen bei der Herstellung von Verdampferplatten anstelle des bisher verwendeten Reinaluminiums. Weist die Aluminiumlegierung eine Zugfestigkeit von mindestens 200 N / mm² auf, lässt sich eine erhebliche Materialeinsparung bei der Herstellung der Verdampferplatten erzielen. Trotz des Einsatzes von Blechen geringerer Dicke lassen sich die selben Druck- und Berstfestigkeiten der Verdampferplatte erzielen. Geeignete Aluminiumlegierungen sind beispielsweise die nachfolgend genannten Aluminium-Knetlegierungen:
Al Mg 3
Al Mg Si 1 oder
Al Cu Mg 1.

Die vorgenannten Legierungen weisen eine Zugfestigkeit im Bereich von 200 N / mm ² bis 250 N / mm² und eine Bruchdehnung von 12 % bis 15 % auf. Der Einsatz dieser Legierungen ermöglicht Blechdicken von weniger als 0,6 mm.

In vorteilhafter Ausgestaltung der Erfindung werden zumindest die zu verklebenden Flächen der Bleche einer mechanischen und / oder thermischen Oberflächenbehandlung unterzogen. Abhängig von der verwendeten Aluminiumlegierung für die Bleche und dem verwendeten Kleber empfiehlt sich eine Oberflächenbehandlung, insbesondere eine chromfreie Beizassivierung für Aluminium, die im Tauch- oder Spritzverfahren aufgebracht wird. Die derart erzeugte Oxydationsschicht vermeidet unkontrollierte Oxydationen der verarbeiteten Bleche. Zusätzlich oder alternativ können weitere mechanische und / oder thermische Oberflächenbehandlungen der zu verklebenden Flächen durchgeführt werden. Mechanische Oberflächenbehandlungen (z.B. Bürsten) entfernen Verschmutzungen und rauen die Oberfläche auf, was sich bei bestimmten Klebstoffen vorteilhaft auf die Festigkeit der Klebeverbindung auswirken kann. Die thermische Oberflächenbehandlung entfettet die Oberfläche.

Je nach den Aushärtebedingungen und der Konsistenz des verwendeten Klebstoffs ist es zweckmäßig, dass die zusammengefügten und auf Verdampferplattengröße geschnitten Bleche bis zum Erreichen einer Mindestaushärtung des Klebers mechanisch zueinander fixiert werden. Um eine Presse hierfür nicht unvertretbar lange mit einer Verdampferplatte zu blockieren, kann im Presswerkzeug an mehreren auf die Verdampferplattenfläche gleichmäßig verteilten Stellen mittels Durchsetzfügen (Clinchen) eine in der Plattenebene wirksame formschlüssige Verbindung erzeugt werden, die die für die Kleberaushärtung erforderliche Fixierung aufrechterhält. Die auf diese Weise fixierten Verdampferplatten können die Presse sofort wieder verlassen und falls erforderlich einen Aushärteofen durchlaufen oder unter normalen Umgebungsbedingungen bis zur geforderten Kleberendfestigkeit aushärten.

Je nach verwendetem Kleber kann es erforderlich sein, dass die derart mechanisch fixierten Bleche zusätzlich aufeinander gepresst und/oder erwärmt werden. Hierzu werden die Platten mit elastischen Zwischenlagen zu einem Stapel aufeinander gelegt, um dann unter dem Druck einer Presse und/oder gleichzeitiger Temperatureinwirkung die geforderte Zeit auszuhärten.

Nach abgeschlossener Aushärtung schließen sich eine etwaige Nachbearbeitung, wie beispielsweise Stanzen, Biegen, Bördeln und Lackieren, an.

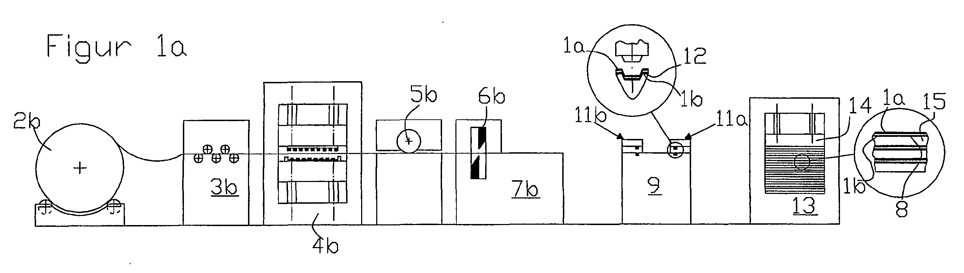

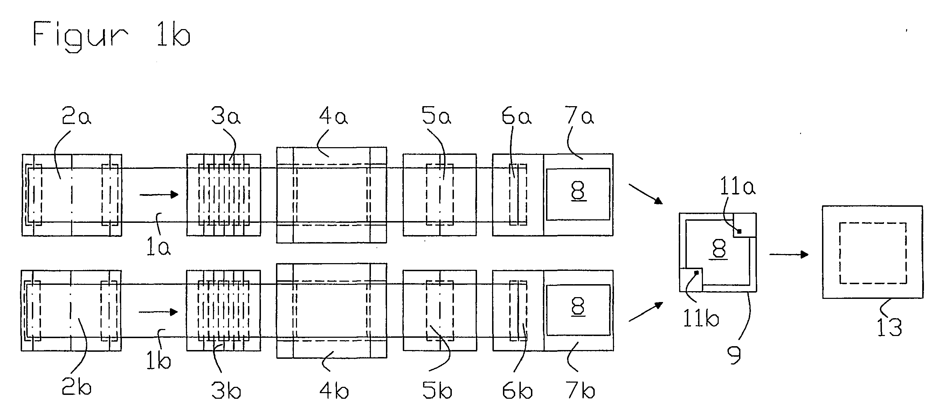

In den Figuren 1 a, 1b ist beispielhaft eine Fertigungsstraße zur Durchführung des erfindungsgemäßen Verfahrens in einer Seitenansicht und einer Draufsicht dargestellt:

Das Ausführungsbeispiel zeigt eine 2-adrige Fertigungsstraße, in der parallel zwei Bleche 1a, 1b bearbeitet werden. Die jeweils von einem Coil 2a, 2b abgehaspelten bandförmigen Bleche 1a, 1b werden nach dem Richten in jeweils einer Rollenrichtmaschine 3a, 3b Prägestationen 4a, 4b zugeführt, die den Kanalverlauf für das Kältemittel durch Prägen in beide Bleche einbringen. Sollen die Kältemittelkanäle nur einseitig eingeprägt werden, kann eine der Prägestationen 4a oder 4b entfallen; in diese Fall wird ein ebenes Blech mit einem geprägten Blech zusammengefügt.

Anschließend erfolgt der Kleberauftrag in beiden Strängen mit jeweils einer oberhalb des Bandlaufs angeordneten Walze 5a, 5b. Erst nach dem Aufrollen des Klebers werden die bandförmigen Bleche 1a, 1b mit Scheren 6a, 6b in Schneidstationen 7a, 7b auf die Größe der herzustellenden Verdampferplatte 8 abgelängt.

Um eine Produktionseinschränkung durch das Aushärten des Klebstoffs in einer Presse zu vermeiden, werden die in den beiden parallel angeordneten Fertigungsstraßen hergestellten und auf Größe der Verdampferplatte abgelängten Bleche 1a, 1b in einem Presswerkzeug 9 zusammengebracht und an zwei Stellen 11a, 11b mittels Durchsetzfügen (Clinchen) in einer in der Blechebene wirksamen formschlüssigen Verbindung 12 in ihrer Position zueinander fixiert.

Die so fixierten Verdampferplatten verlassen das Presswerkzeug 9 sofort wieder und gelangen in eine Aushärtestation 13 in der sie unter dem Druck einer Presse 14 und gleichzeitiger Temperatureinwirkung chargenweise bis zur geforderten Klebstoffendfestigkeit aushärten. Zwischen den aushärtenden Verdampferplatten 8 befinden sich elastische Zwischenlagen 15, die eine Beschädigung der beidseitig ausgeprägten Kühlmittelkanäle in der Aushärtestation 13 verhindern. Wenn die Kapazität der Aushärtestation 13 nicht sämtliche aus den beiden Coils 2a, 2b herstellbaren Verdampfer 8 aufnehmen kann, können zur Sicherung eines kontinuierlichen Produktionsflusses mehrere Aushärtestationen vorgesehen sein.

Der Transport der Bleche 1a, 1b zwischen den Schneidstationen 7a, 7b, dem Presswerkzeug 9 und der Aushärtestation 13 erfolgt vorteilhafterweise automatisch, beispielsweise mittels in den Figuren aus Gründen der Übersichtlichkeit nicht dargestellten Fördermitteln und getakteten Greif- und Hebeeinrichtungen.

### Bezugszeichenliste

| **Nr.** | **Bezeichnung** |
|---|---|
| 1.a, b | Bleche |
| 2.a, b | Coil |
| 3.a, b | Rollenrichtmaschine |
| 4.a, b | Prägestation |
| 5.a, b | Walze |
| 6.a, b | Scheren |
| 7.a, b | Schneidstationen |
| 8. | Verdampferplatte |
| 9. | Presswerkzeug |
| 10. | --------- |
| 11.a, b | Stellen |
| 12. | formschlüssige Verbindung |
| 13. | Aushärtestation |
| 14. | Presse |
| 15. | elastische Zwischenlager |

## Patentansprüche

1. Verdampferplatte für eine Kältemaschine mit zwischen zwei aufeinanderliegenden Blechen angeordneten Kältemittelkanälen, **dadurch gekennzeichnet, dass** die Bleche (1a, 1b) mittels eines Klebstoffes miteinander verbunden sind, der beständig gegen Kältemittel ist und zumindest im Temperaturbereich zwischen - 30° C und + 40° C seine Klebeeigenschaften beibehält.

2. Verdampferplatte nach Anspruch 1, **dadurch gekennzeichnet, dass** die Klebeflächen der Bleche oberflächenbehandelt sind.

3. Verdampferplatte nach Anspruch 1 oder 2, **dadurch gekennzeichnet, dass** der Klebstoff ein Zweikomponenten-Polyurethan oder ein Einkomponenten-Epoxidharz-Klebstoff ist.

4. Verdampferplatte nach einem der Ansprüche 1 bis 3, **dadurch gekennzeichnet, dass** der Werkstoff der Bleche (1a, 1b) eine Aluminiumlegierung mit einer Zugfestigkeit von mindestens 200 N / mm ² ist.

5. Verdampferplatte nach einem der Ansprüche 1 bis 4, **dadurch gekennzeichnet, dass** die Bleche (1a, 1b) kalt umgeformte Kältemittelkanäle aufweisen.

6. Verfahren zum Herstellen von Verdampferplatten, insbesondere nach den Ansprüchen 1 bis 5, aus zwei aufeinanderliegenden Blechen (1a, 1b), wobei in wenigstens eines der Bleche (1a) der Kanalverlauf für das Kältemittel eingebracht wird, **dadurch gekennzeichnet, dass** die beiden Bleche (1a, 1b) durch einen Klebstoff gefügt werden und dass zum Fügen ein Klebstoff verwendet wird, der beständig gegen Kältemittel ist und zumindest im Temperaturbereich zwischen - 30° C und + 40° C seine Klebeeigenschaften beibehält.

7. Verfahren zum Herstellen von Verdampferplatten nach Anspruch 6, **dadurch gekennzeichnet, dass** nach einem Richten der zu fügenden Bleche (1a, 1b) der Kanalverlauf für das Kältemittel in wenigstens eines der beiden Bleche (1a) durch Tiefziehen eingebracht wird.

8. Verfahren zum Herstellen von Verdampferplatten nach Anspruch 6, **dadurch gekennzeichnet, dass** nach einem Richten der zu fügenden Bleche (1a, 1b) der Kanalverlauf für das Kältemittel in wenigstens eines der beiden Bleche (1a) durch Prägen eingebracht wird.

9. Verfahren zum Herstellen von Verdampferplatten nach einem der Ansprüche 6 bis 8, **dadurch gekennzeichnet, dass** die Bleche (1a, 1b) vor oder nach dem Auftragen des Klebstoffs auf Verdampferplattengröße geschnitten werden.

10. Verfahren zum Herstellen von Verdampferplatten nach einem der Ansprüche 6 bis 9, **dadurch gekennzeichnet, dass** auf beide Bleche (1a, 1b) ein temperaturabhängiger Klebstoff vor dem Einbringen des Kanalverlauf für das Kältemittel in wenigstens eines der beiden Bleche (1a) flächig aufgebracht wird, wobei die Klebwirkung des temperaturabhängigen Klebstoffs erst nach Erwärmen auf eine definierte Temperatur einsetzt.

11. Verfahren zum Herstellen von Verdampferplatten nach einem der Ansprüche 6 bis 10, **dadurch gekennzeichnet, dass** zumindest die zu verklebenden Flächen der Bleche (1a, 1b) einer einer mechanischen und / oder thermischen Oberflächenbehandlung unterzogen werden.

12. Verfahren zum Herstellen von Verdampferplatten nach einem der Ansprüche 6 bis 11, **dadurch gekennzeichnet, dass** die zusammengefügten und auf Verdampferplattengröße geschnitten Bleche bis zum Erreichen einer Mindestaushärtung des Klebstoffs zueinander fixiert werden.

13. Verfahren zum Herstellen von Verdampferplatten nach Anspruch 12, **dadurch gekennzeichnet, dass** die mechanisch fixierten Bleche zusätzlich aufeinander gepresst und/oder erwärmt werden.

## Claims

1. An evaporator plate for a refrigerating machine having coolant channels situated between two sheets lying one on top of another, **characterized in that** the sheets (1a, 1b) are bonded to one another using an adhesive, which is resistant to coolant and maintains its adhesive properties at least in the temperature range between -30°C and + 40°C.

2. The evaporator plate according to claim 1, **characterized in that** the adhesive faces of the sheets are surface treated.

3. The evaporator plate according to claim 1 or 2, **characterized in that** the adhesive is a two-component polyurethane or a one-component epoxide resin adhesive.

4. The evaporator plate according to one of claims 1 through 3, **characterized in that** the material of the sheets (1a, 1b) is an aluminum alloy having a tensile strength of at least 200 N/mm².

5. The evaporator plate according to one of claims 1 through 4, **characterized in that** the sheets (1a, 1b) have cold formed coolant channels.

6. A method for producing evaporator plates, particularly according to claims 1 through 5, from two sheets (1a, 1b) lying one on top of another, the channel course for the coolant being introduced into at least one of the sheets (1a), **characterized in that** the two sheets (1a, 1b) are joined by an adhesive and an adhesive, which is resistant to coolant and maintains its adhesive properties at least in the temperature range between -30°C and +40°C, is used for joining.

7. The method for producing evaporator plates according to claim 6, **characterized in that** after the sheets (1a, 1b) to be joined are straightened, the channel course for the coolant is introduced into at least one of the two sheets (1a) through deep drawing.

8. The method for producing evaporator plates according to claim 6, **characterized in that** after the sheets (1a, 1b) to be joined are straightened, the channel course for the coolant is introduced into at least one of the two sheets (1a) through embossing.

9. The method for producing evaporator plates according to one of claims 6 through 8, **characterized in that** the sheets (1a, 1b) are cut to evaporator plate size before or after the application of the adhesive.

10. The method for producing evaporator plates according to one of claims 6 through 9, **characterized in that** a temperature-dependent adhesive is applied flatly to both sheets (1a, 1b) before the channel course for the coolant is introduced into at least one of the two sheets (1a), the adhesive effect of the temperature-dependent adhesive first setting in after heating to a defined temperature.

11. The method for producing evaporator plates according to one of claims 6 through 10, **characterized in that** at least one of the faces of the sheets (1a, 1b) to be glued is subjected to a mechanical and/or thermal surface treatment.

12. The method for producing evaporator plates according to one of claims 6 through 11, **characterized in that** the joined sheets, which are cut to evaporator plate size, are fixed to one another until reaching a minimum curing of the adhesive.

13. The method for producing evaporator plates according to claim 12, **characterized in that** the mechanically fixed sheets are additionally pressed on one another and/or heated.

## Revendications

1. Plaque d'évaporateur pour une machine frigorifique avec des conduits à fluide réfrigérant disposés entre deux tôles superposées, **caractérisée en ce que** les tôles (1a, 1b) sont reliées entre elles au moyen d'un adhésif, qui résiste aux réfrigérants et qui conserve ses caractéristiques adhésives au moins dans la plage de températures comprise entre -30°C et +° 40°C.

2. Plaque d'évaporateur selon la revendication 1, **caractérisée en ce que** les surfaces adhésives des tôles ont subi un traitement de surface.

3. Plaque d'évaporateur selon la revendication 1 ou 2, **caractérisée en ce que** l'adhésif est un polyuréthane bi-composant ou un adhésif à base de résine époxy mono-composant.

4. Plaque d'évaporateur selon l'une quelconque des revendications 1 à 3, **caractérisée en ce que** le matériau des tôles (1a, 1b) est un alliage d'aluminium avec une résistance à la traction d'au moins 200 N/mm².

5. Plaque d'évaporateur selon l'une quelconque des revendications 1 à 4, **caractérisée en ce que** les tôles (1a, 1b) comportent des conduits à fluide réfrigérant façonnés à froid.

6. Procédé de fabrication de plaques d'évaporateur, notamment selon les revendications 1 à 5, à partir de deux tôles superposées (1a, 1b), le trajet des conduits pour le fluide réfrigérant étant ménagé dans au moins l'une des tôles (1a), **caractérisé en ce qu'**on assemble les deux tôles (1a, 1b) avec un adhésif et **en ce que** pour l'assemblage, on utilise un adhésif qui résiste aux réfrigérants et qui conserve ses caractéristiques adhésives au moins dans la plage de températures comprise entre -30°C et +° 40°C.

7. Procédé de fabrication de plaques d'évaporateur selon la revendication 6, **caractérisé en ce qu'**après un dressage des tôles à assembler (1a, 1b), on ménage le tracé des conduits pour le fluide réfrigérant par emboutissage dans au moins l'une des deux tôles (1a).

8. Procédé de fabrication de plaques d'évaporateur selon la revendication 6, **caractérisé en ce qu'**après un dressage des tôles à assembler (1a, 1b), on ménage le tracé des conduits pour le fluide réfrigérant par estampage dans au moins l'une des deux tôles (1a).

9. Procédé de fabrication de plaques d'évaporateur selon l'une quelconque des revendications 6 à 8, **caractérisé en ce qu'**on coupe les tôles (1a, 1b) à la dimension des plaques d'évaporateur avant ou après application de l'adhésif.

10. Procédé de fabrication de plaques d'évaporateur selon l'une quelconque des revendications 6 à 9, **caractérisé en ce que** sur les deux tôles (1a, 1b), on applique en nappe un adhésif variable avec la température, avant de ménager le tracé des conduits pour le fluide réfrigérant dans au moins l'une des deux tôles (1a), l'effet adhésif de l'adhésif variable avec la température ne se produisant qu'après échauffement à une certaine température.

11. Procédé de fabrication de plaques d'évaporateur selon l'une quelconque des revendications 6 à 10, **caractérisé en ce qu'**on soumet au moins les surfaces à coller des tôles (1a, 1b) à un traitement de surface mécanique et/ou thermique.

12. Procédé de fabrication de plaques d'évaporateur selon l'une quelconque des revendications 6 à 11, **caractérisé en ce qu'**on fixe mutuellement les tôles assemblées et coupées à la dimension des plaques d'évaporateur jusqu'à l'obtention d'un durcissement minimal de l'adhésif.

13. Procédé de fabrication de plaques d'évaporateur selon la revendication 12, **caractérisé en ce qu'**en supplément, on presse l'une sur l'autre et/ou on chauffe les tôles fixées mécaniquement.
